# EUROPEAN PATENT APPLICATION

(11) **EP 2 415 344 A1**
(43) Date of publication of application: **08.02.2012**
(21) Application number: 11176421.3
(22) Date of filing: 03.08.2011
(51) Int. Cl.: A01K 1/02

(54) **Method for feeding of piglets**

(30) Priority: 06.08.2010 NL 2005203
(71) Applicant: Schippers Europe B.V., 5531 AH Bladel (NL)
(72) Inventor: Schippers, Martinus Pancratius Maria, 5531 AH Bladel (NL)
(74) Representative: Geurts, Franciscus Antonius

(57) **Abstract**

Method for feeding piglets in a farrowing pen, wherein the farrowing pen (1) is divided into a feeding area (5), a first seclusion area (6) and a second seclusion area (7) that are separated from one another, wherein the farrowing pen is provided with passages (16-18) that can be closed off to piglets (13,14) in order to selectively allow movements of piglets between the feeding area and the seclusion areas, wherein the farrowing pen is provided with a first group of piglets (13), a second group of piglets (14) and a sow (8) placed in the feeding area, wherein the method comprises alternately allowing the first group of piglets and the second group of piglets through a passage out of one of the seclusion areas into the feeding area, wherein the first group of piglets and the second group of piglets remain separated from each other.

## Description

### BACKGROUND OF THE INVENTION

The invention relates to a method for feeding piglets.

According to a known method a sow and her piglets are placed together in a farrowing pen. The sow has teats from which she nurses her piglets. The number of piglets born to a sow often exceeds the number of the sow's teats. The sibling rivalry that thus arises between the piglets will deprive some piglets, particularly the weaker piglets, of the opportunity to be fed sufficient milk. As a proper milk provision is crucial to the health of the piglets, a shortage of milk may be fatal.

It is an object of the invention to provide a method and a farrowing pen for feeding piglets, wherein the mortality of piglets resulting from a shortage of milk is counteracted.

### SUMMARY OF THE INVENTION

According to a first aspect the invention provides a method for feeding piglets in a farrowing pen, wherein the farrowing pen is divided into a feeding area, a first seclusion area and a second seclusion area that are separated from one another, wherein the farrowing pen is provided with passages that can be closed off to piglets in order to selectively allow movements of piglets between the feeding area and the seclusion areas, wherein the farrowing pen is provided with a first group of piglets, a second group of piglets and a sow placed in the feeding area, wherein the method comprises alternately allowing the first group of piglets and the second group of piglets through a passage out of one of the seclusion areas into the feeding area, wherein the first group of piglets and the second group of piglets remain separated from each other. Alternately allowing the two groups of piglets into the feeding area enables the sow to feed her own piglets in stages, without all piglets being in the feeding area simultaneously. By keeping the groups of piglets separated within the farrowing pen, the number of piglets that is simultaneously present in the feeding area can be reduced, wherein the piglets present in the feeding area will be able to take sufficient milk from the sow's teats.

In one embodiment the method comprises having the first group of piglets and the second group of piglets circulate via the passages through successively the feeding area, the first seclusion area and the second seclusion area, wherein the first group of piglets and the second group of piglets remain separated from each other. During circulation the first group of piglets and the second group of piglets successively stay in all areas of the farrowing pen, while they remain separated from each other. The first seclusion area and the second seclusion area may as a result be adapted to a particular function, for instance letting the piglets rest or preparing the piglets by stimulating their appetite.

In one embodiment the circulation comprises luring or driving the first group of piglets out of the first seclusion area into the second seclusion area, keeping the first group of piglets staying in the second seclusion area separated from the first seclusion area and the feeding area, luring or driving the second group of piglets out of the feeding area into the first seclusion area, allowing the first group of piglets out of the second seclusion area into the feeding area with the sow as from the moment that the second group of piglets is staying in the first seclusion area separated from the feeding area, luring or driving the second group of piglets out of the first seclusion area into the second seclusion area, keeping the second group of piglets staying in the second seclusion area separated from the first seclusion area and the feeding area, luring or driving the first group of piglets out of the feeding area into the first seclusion area, and allowing the second group of piglets out of the second seclusion area into the feeding area with the sow as from the moment that the first group of piglets is staying in the first seclusion area separated from the feeding area. During circulation the first group of piglets and the second group of piglets successively stay in all areas of the farrowing pen, while they remain separated from each other.

In one embodiment the feeding area is provided with a floor grid which allows manure to pass through. The floor grid that allows manure to pass through has a pattern that irregularly supports a piglet's hoof within the size of the hoof print. The irregular support may be experienced as less comfortable by the piglets walking around in the feeding area, as a result of which after having drunk milk from the sow's teats they will prefer the first seclusion area over the floor grid that allows manure to pass through in the feeding area.

In one embodiment the first seclusion area is provided with a substantially level, closed floor. The piglets walking around in the feeding area after having drunk milk from the sow's teats will prefer the substantially level closed floor of the first seclusion area over the floor grid in the feeding area.

In one embodiment the first seclusion area is provided with a heat source, wherein the method comprises the step of actuating the heat source, in order to lure the group of piglets present in the feeding area out of the feeding area into the first seclusion area. The heat source may heat the first seclusion area, in order to make the stay in the first seclusion area even more alluring to the saturated piglets than the stay on the floor grid in the feeding area.

In one embodiment heat source is a thermal lamp.

In one embodiment the heat source is a floor heating.

In one embodiment the second seclusion area, at least during the steps of luring or driving the first or second group of piglets out of the first seclusion area into the second seclusion area, is provided with enticing food, in order to lure the group of piglets present in the first seclusion area out of the first seclusion area into the second seclusion area. To the piglets staying in the first seclusion area, the enticing food may make the second seclusion area more alluring than the stay in the first seclusion area.

In one embodiment the enticing food is milk or colostrum. The milk may stimulate the piglets' appetite, as a result of which, after the milk is finished, they will prefer the feeding area over the stay in the second seclusion area.

In one embodiment the number of piglets per group is smaller than or equal to the number of teats of the sow. As a result all piglets present simultaneously in the feeding area are able to take sufficient milk from the sow's teats.

In one embodiment the feeding area, the first seclusion area and the second seclusion area are adjacent to each other.

In one embodiment the farrowing pen is provided with a control unit, wherein the method comprises releasing the passages by means of the control unit. Circulation can be automated by means of the control unit.

In one embodiment the farrowing pen is provided with a detection device, wherein the piglets have each been provided with a unique identification, wherein the method comprises the step of detecting the unique identifications in order to verify whether the piglets of the groups are all there in a certain area. In that way it is counteracted that a passage is closed off whereas not all piglets of a group are all together in one area.

According to a second aspect the invention provides a farrowing pen for circulating the feeding of piglets, which pen is divided into a feeding area, a first seclusion area and a second seclusion area which are consecutive to and separated from one another, wherein the farrowing pen is provided with passages that can be closed off to piglets in order to allow movements of piglets between the feeding area and the seclusion areas, wherein the farrowing pen is provided with a first group of piglets, a second group of piglets and a sow placed in the feeding area, wherein the first group of piglets and the second group of piglets are separated from each other. By keeping the piglets separated the number of piglets present in the feeding area can be reduced, wherein the piglets present in the feeding area are able to take sufficient milk from the sow's teats.

In one embodiment the feeding area is provided with a floor grid which allows manure to pass through. The floor grid that allows manure to pass through has a pattern that irregularly supports a piglet's hoof within the size of the hoof print. The irregular support may be experienced as less comfortable by the piglets walking around in the feeding area, as a result of which after having drunk milk from the sow's teats they will prefer the first seclusion area over the floor grid that allows manure to pass through in the feeding area.

In one embodiment the first seclusion area is provided with a substantially level, closed floor. The piglets walking around in the feeding area after having drunk milk from the sow's teats will prefer the substantially level closed floor of the first seclusion area over the floor grid that allows manure to pass through in the feeding area.

In one embodiment the first seclusion area is provided with a heat source. The heat source may heat the first seclusion area, in order to make the stay in the first seclusion area more alluring to the saturated piglets than the stay on the floor grid in the feeding area.

In one embodiment heat source is a thermal lamp.

In one embodiment the heat source is a floor heating.

In one embodiment the second seclusion area is provided with enticing fodder. To the piglets staying in the first seclusion area, the enticing food may make the second seclusion area more alluring than the stay in the first seclusion area.

In one embodiment the enticing food is milk or colostrum. The milk may stimulate the piglets' appetite, as a result of which, after the milk is finished, they will prefer the feeding area over the stay in the second seclusion area.

In one embodiment the number of piglets per group is smaller than or equal to the number of teats of the sow. As a result all piglets present simultaneously in the feeding area are able to take sufficient milk from the sow's teats.

It is noted that from International patent application 2010/080162 a farrowing pen is known that is provided with a partition wall that can be lowered into a hole in the ground, which partition wall prevents that a group of piglets may join the sow. Furthermore from Dutch patent 1027517 a piglet nest is known that is separated from a farrowing pen by a separate partition. There is no question in either document of a farrowing pen in which two groups of piglets remain separated from each other.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached schematic drawings, in which:
Figures 1-6 show schematic views of the steps of a method for feeding piglets in a farrowing pen according to the invention;
Figure 7 shows a top view of an alternative embodiment of the farrowing pen according to the invention.

### DETAILED DESCRIPTION OF THE DRAWINGS

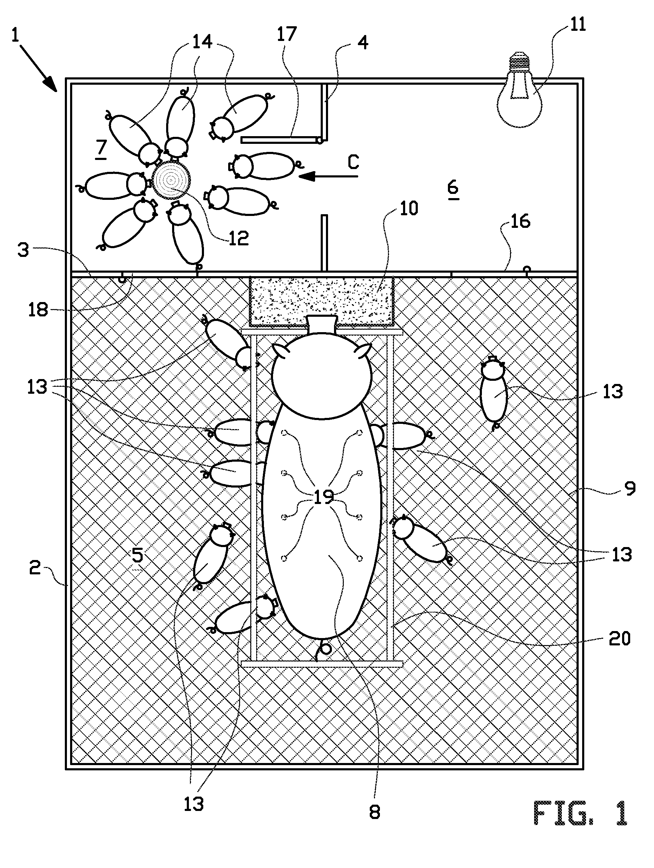

Figures 1-6 show a top view of a farrowing pen 1 for keeping a sow 8 and the piglets 13, 14 she farrowed. This farrowing pen 1 may be part of a series or collection of said farrowing pens 1 that are placed separated from each other in a pig farm. The description given below is limited to one of said farrowing pens 1.

The farrowing pen 1 comprises a circumferential outer wall 2, composed of for instance fencing segments or panels. Inside the farrowing pen 1 is provided with a first partition 3 extending transverse to the longitudinal direction of the farrowing pen 1 between the opposing longitudinal sides of the circumferential outer wall 2 and a second partition 4 extending parallel to the longitudinal direction of the farrowing pen 1 between the first partition 3 and the neighbouring head side of the circumferential outer wall 2.

The first partition 3 and the second partition 4 divide the farrowing pen 1 into a feeding area 5, a first seclusion area 6 and a second seclusion area 7, that are separated from one another. The first seclusion area 6 and the second seclusion area 7 are of approximately the same size and each have a surface area on which at least eight piglets 13, 14 can stay. The first seclusion area 6 and the second seclusion area 7 are provided with a substantially level closed floor. The seclusion areas 6, 7 are considerably smaller than the feeding area 5.

The farrowing pen 1 comprises a first door 16 in the part of the first partition 3 between the feeding area 5 and the first seclusion area 6, a second door 17 in the second partition 4 and a third door 18 in the part of the first partition 3 between the feeding area 5 and the second seclusion area 7. The doors 16-18 have a passage width through which the piglets 13, 14 can go, but through which the sow 8 does not fit.

In the feeding area 5, the farrowing pen 1 is provided with a floor grid 9 that allows manure to pass through, a trough 10 placed on the floor grid and containing solid food for the sow 8 and in the middle of the feeding area 5, adjacent to the trough 10 a pipe frame 20 for retaining the sow 8 within it. The pipes of the pipe frame 20 are at such a level from the floor grid 9 that the piglets 13, 14 are able to join the sow from under the pipes.

In the first seclusion area 6 the farrowing pen 1 is provided with a schematically depicted thermal lamp 11 or another suitable heat source. The first seclusion area may furthermore be provided with a floor heating. In the second seclusion area 7 the farrowing pen 1 is provided with a milk source in the shape of a schematically depicted milk bowl containing a limited quantity of colostrum or milk 12 or another enticing food suitable for the piglets 13, 14. The colostrum or milk 12 may alternatively be dispensed by an artificial sow.

The farrowing pen 1 described above may in an alternative embodiment be automated. The farrowing pen 1 is then provided with a control unit, such as a computer. The control unit may comprise a timer and/or a number of sensors for measuring parameters and regularly giving control signals for controlling for instance the thermal lamp 11, providing enticing food and opening and closing the doors 16-18.

In an alternative embodiment the piglets 13, 14 have each been provided with a unique electronic identification. The farrowing pen 1 is provided with an electronic reader able to detect and identify the presence of the unique electronic identification, for instance by means of RFID technology. On the basis of the electronic reader it can be established whether all piglets of a certain group are present within an area, for instance the first seclusion area 6 or the second seclusion area 7. The doors 16-18 can be operated on the basis thereof.

Figures 1-6 show steps of a method for feeding the piglets 13, 14 in the farrowing pen 1 as described above. The following method takes place in one farrowing pen 1. In a pig farm said method will take place within each of said farrowing pens 1.

Figure 1 shows the situation in which a first group of eight piglets 13 is in the feeding area 5, together with the sow 8. The eight piglets 13 of the first group are thus enabled to drink colostrum or milk from the teats 19 of the sow 8 until they are saturated. With their hoofs the piglets 13 of the first group stand on the floor grid 9. In the second seclusion area 7 a limited quantity of milk 12 is released. The thermal lamp 11 in the first seclusion area 6 is switched off. A second group of eight piglets 14 has moved through the opened door 17 out of the first seclusion area 6 in the direction C into the second seclusion area 7, where obtaining milk 12 is preferable over the stay in the first seclusion area 6 that is cooling down. The first door 16 and the third door 18 are closed, as a result of which the first group of piglets 13 and the second group of piglets 14 are separated from each other.

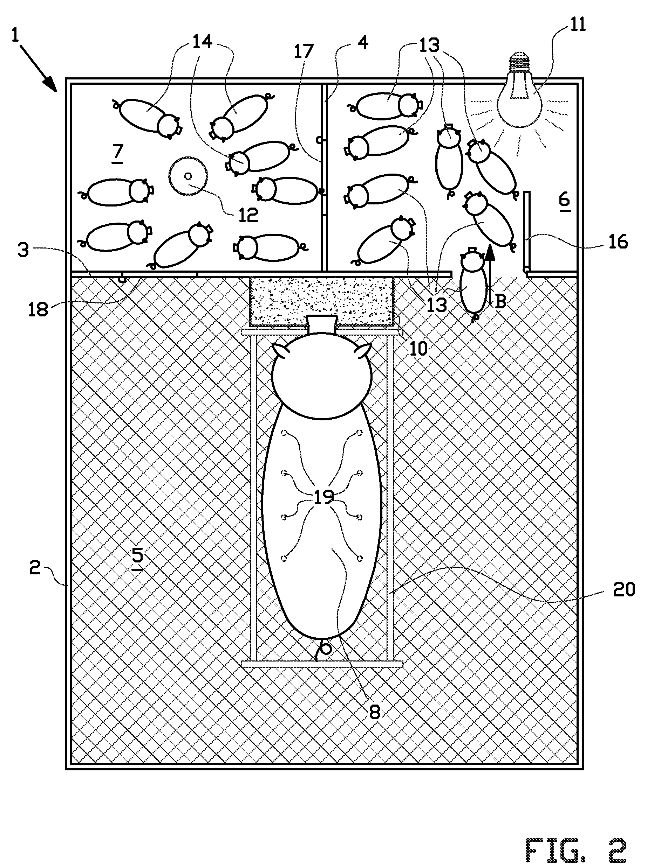

In figure 2 the situation is shown in which the second door 17 is closed. The second group of eight piglets 14 is thus confined in the second seclusion area 7. Subsequently the first door 16 is opened and the thermal lamp 11 is switched on again, as a result of which for the eight saturated piglets of the first group 13 a comfortable temperature prevails in the first seclusion area 6. The first group of eight piglets 13 then prefer the heated first seclusion area 6 over the floor grid 9 of the feeding area 5. The first group of eight piglets 13 has moved through the opened first door 16 out of the feeding area 5 in direction B into the first seclusion area 6. The second group of piglets 14 has been fed a limited quantity of milk 12 in the second seclusion area 7, without getting saturated. The appetite of the second group of piglets 14 has thus been stimulated.

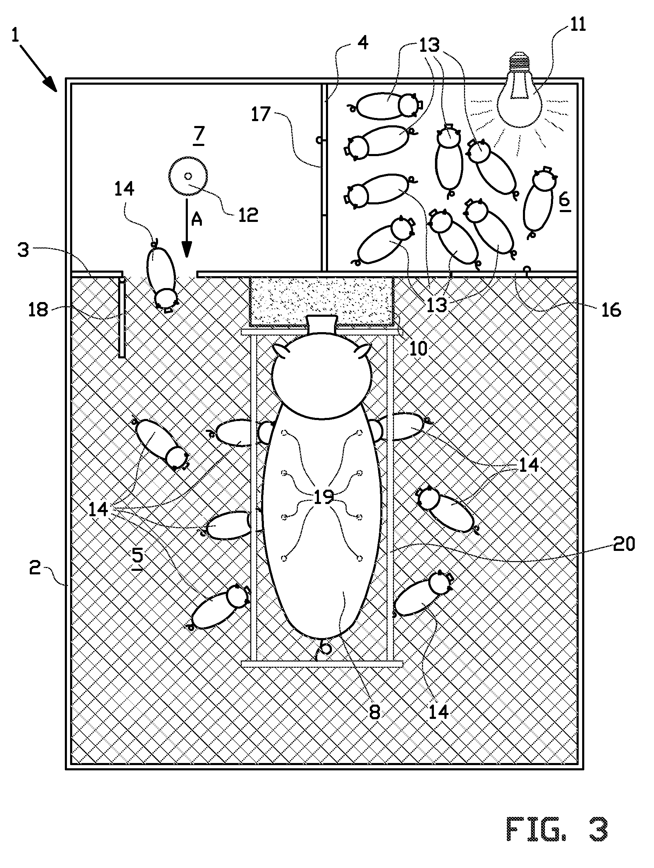

Figure 3 shows the situation in which the first door 16 is closed after all piglets 13 of the first group have gone to the first seclusion area 6. The saturated first group of piglets 13 stays comfortably in the heated first seclusion area 6. Subsequently the third door 18 is opened in order to give the second group of piglets 14 present in the second seclusion area 7 access to the feeding area 5. The second group of piglets 14 moves in direction A into the feeding area 5, where obtaining milk from the teats 19 of the sow 8 is preferred over the milk 12 that has run out in the second seclusion area 7.

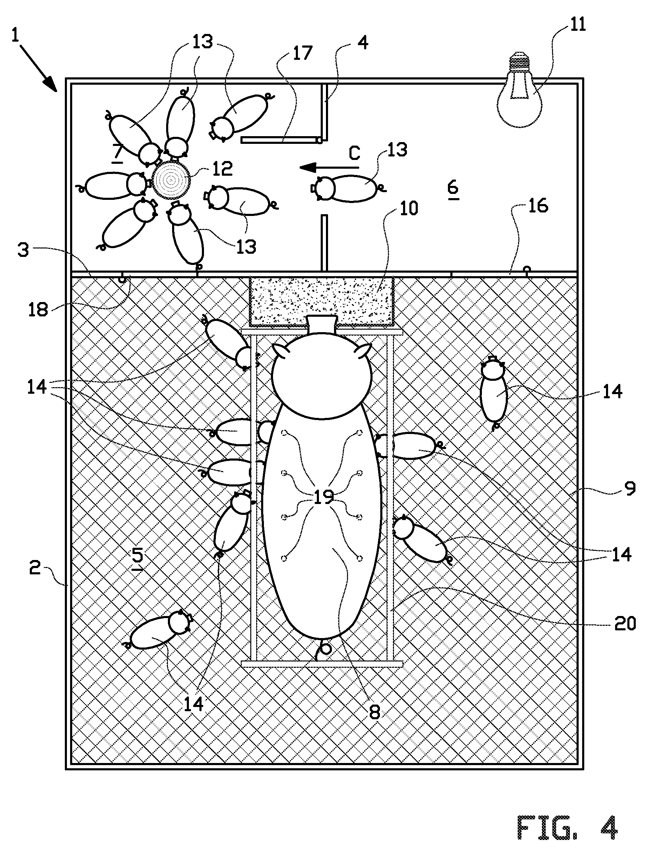

Figure 4 shows the situation in which the second group of eight piglets 14 is in the feeding area 5, together with the sow 8. The eight piglets 14 of the second group are given the opportunity to drink milk from the teats 19 of the sow 8 until they are saturated. With their hoofs the eight piglets 14 of the second group stand on the floor grid 9. In the second seclusion area 7 once again a limited quantity of milk 12 has been released. The thermal lamp 11 in the first seclusion area 6 is switched off. The first group of eight piglets 13 has moved through the opened second door 17 out of the first seclusion area 6 in direction C into the second seclusion area 7, where obtaining milk is preferable over the stay in the first seclusion area 6 that is cooling down. The first door 16 and the third door 18 are closed, as a result of which the first group of piglets 13 and the second group of piglets 14 are separated from each other.

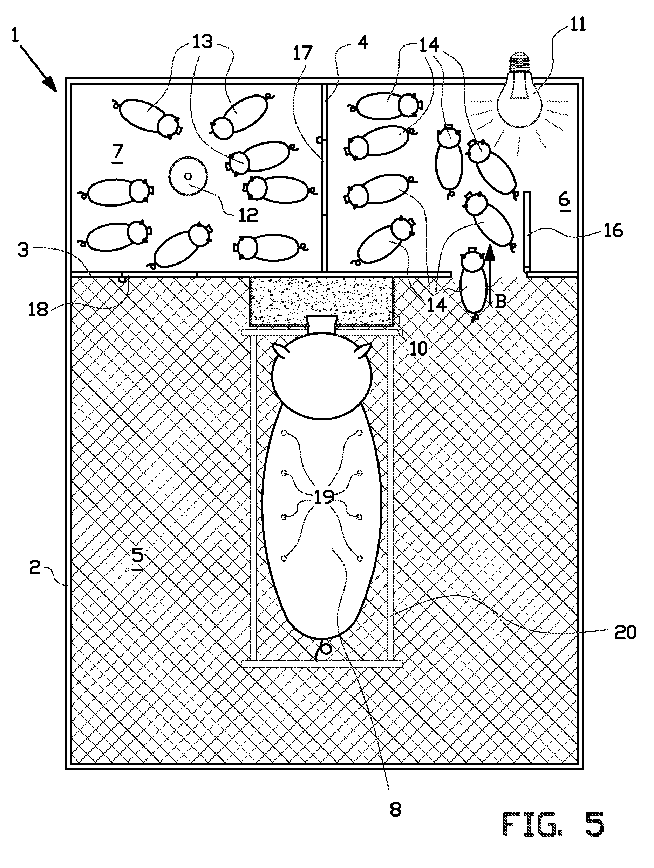

Figure 5 shows the situation in which the second door 17 is closed. The first group of eight piglets 13 is thus confined in the second seclusion area 7. Subsequently the first door 16 is opened and the thermal lamp 11 is once again switched on, as a result of which a comfortable temperature prevails for the second group of eight saturated piglets 14. The second group of eight piglets 14 subsequently prefers the heated first seclusion area 6 over the floor grid 9 of the feeding area 5. The second group of eight piglets 14 has moved through the opened first door 16 out of the feeding area 5 in direction B into the first seclusion area 6. The first group of piglets 13 has been fed a limited quantity of milk 12 in the second seclusion area 7, without getting saturated. The appetite of the first group of piglets 12 has thus been stimulated.

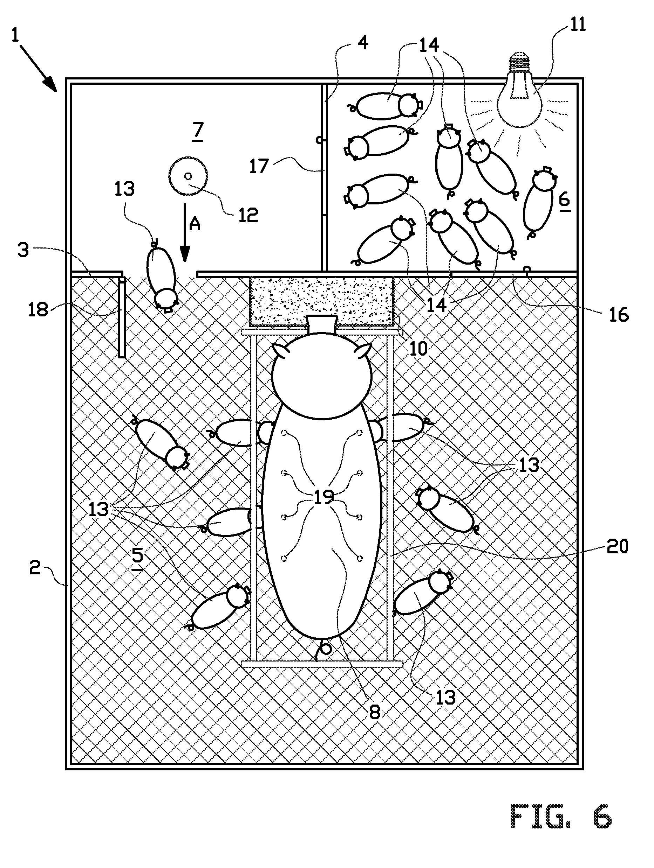

Figure 6 shows the situation in which the first door 16 is closed after all piglets 14 of the second group have gone to the first seclusion area 6. The saturated second group of piglets 14 stays comfortably in the heated first seclusion area 6. Subsequently the third door 18 is opened in order to give the first group of piglets 13 present in the second seclusion area 7 access to the feeding area 5, where obtaining milk from the teats 19 of the sow 8 is preferable over the milk 12 that has run out in the second seclusion area 7.

The method steps as described above can be repeated interminably in order to feed the piglets 13, 14 alternately in groups.

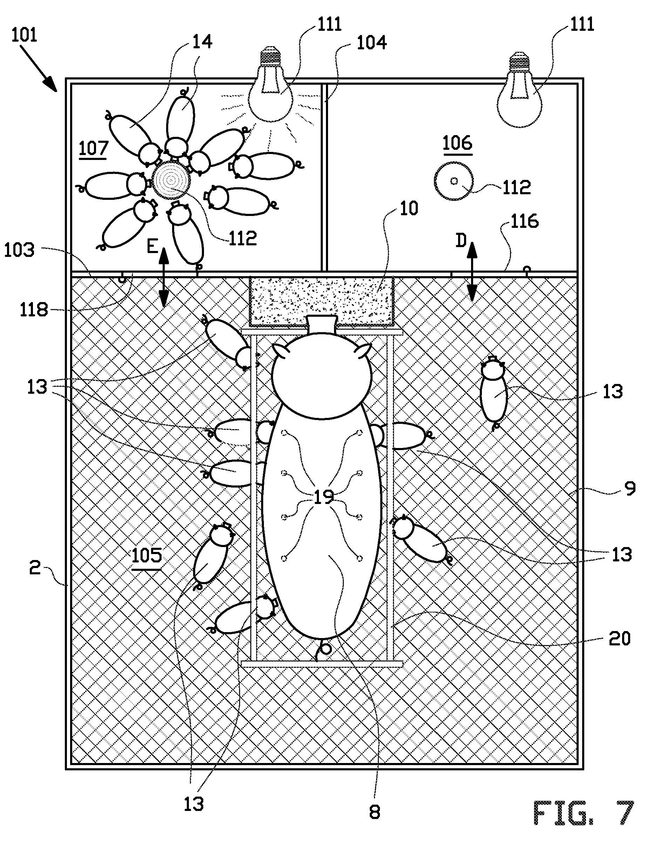

Figure 7 shows an alternative embodiment of the farrowing pen 101, wherein the first seclusion area 106 and the second seclusion area 107 have each been provided with a thermal lamp 111 and/or a milk source such as the bowl 112 of milk, of which the heat and/or the milk 112 can be offered at given times simultaneously or alternately. The first seclusion area 106 and the second seclusion area 107 are separated from each other by a closed partition 104. The first group of eight piglets 13 alternates in direction E between the first seclusion area 106 and the feeding area 105. The second group of eight piglets 14 alternates in direction E between the second seclusion area 107 and the feeding area 105. The first door 116 is not opened until the second group of piglets 14 stay in the second seclusion area 107 and the third door 118 is closed. The third door 118 is not opened until the first group of piglets 13 stay in the first seclusion area 106 and the first door 116 is closed. In that way the first group of piglets 13 and the second group of piglets 14 remain separated during circulation.

The above description is included to illustrate the operation of preferred embodiments of the invention and not to limit the scope of the invention. Starting from the above explanation many variations that fall within the spirit and scope of the present invention will be evident to an expert.

## Claims

1. Method for feeding piglets in a farrowing pen (1), wherein the farrowing pen is divided into a feeding area (5), a first seclusion area (6) and a second seclusion area (7) that are separated from one another, wherein the farrowing pen (1) is provided with passages (16-18) that can be closed off to piglets in order to selectively allow movements of piglets (13, 14) between the feeding area (5) and the seclusion areas (6, 7), wherein the farrowing pen (1) is provided with a first group of piglets (13), a second group of piglets (14) and a sow (8) placed in the feeding area, wherein the method comprises alternately allowing the first group of piglets (13) and the second group of piglets (14) through a passage out of one of the seclusion areas (6, 7) into the feeding area (5), wherein the first group of piglets (13) and the second group of piglets (14) remain separated from each other.

2. Method according to claim 1, comprising having the first group of piglets (13) and the second group of piglets (14) circulate via the passages (16-18) through successively the feeding area (5), the first seclusion area (6) and the second seclusion area (7), wherein the first group of piglets (13) and the second group of piglets (14) remain separated from each other.

3. Method according to claim 2, wherein the circulation comprises luring or driving the first group of piglets (13) out of the first seclusion area (6) into the second seclusion area (7), keeping the first group of piglets (13) staying in the second seclusion area (7) separated from the first seclusion area (6) and the feeding area (5), luring or driving the second group of piglets (14) out of the feeding area (5) into the first seclusion area (6), allowing the first group of piglets (13) out of the second seclusion area (7) into the feeding area with the sow (8) as from the moment that the second group of piglets (14) is staying in the first seclusion area (6) separated from the feeding area (5), luring or driving the second group of piglets (14) out of the first seclusion area (6) into the second seclusion area (7), keeping the second group of piglets (14) staying in the second seclusion area (7) separated from the first seclusion area (6) and the feeding area (5), luring or driving the first group of piglets (13) out of the feeding area (5) into the first seclusion area (6), and allowing the second group of piglets (14) out of the second seclusion area (7) into the feeding area (5) with the sow (8) as from the moment that the first group of piglets (13) is staying in the first seclusion area (6) separated from the feeding area (5).

4. Method according to any one of the preceding claims, wherein the feeding area (5) is provided with a floor grid (9) which allows manure to pass through, wherein preferably the first seclusion area (6) is provided with a substantially level, closed floor.

5. Method according to any one of the preceding claims, wherein the first seclusion area (6) is provided with a heat source, wherein the method comprises the step of actuating the heat source in order to lure the group of piglets (13, 14) present in the feeding area (5) out of the feeding area (5) into the first seclusion area (6), wherein the heat source preferably is a thermal lamp (11) or a floor heating.

6. Method according to any one of the preceding claims, wherein the second seclusion area (7) at least during the steps of luring or driving the first or second group of piglets (13, 14) out of the first seclusion area (6) into the second seclusion area (7), is provided with enticing food, in order to lure the group of piglets (13, 14) present in the first seclusion area (6) out of the first seclusion area (6) into the second seclusion area (7), wherein the enticing food preferably is milk or colostrum (12).

7. Method according to any one of the preceding claims, wherein the number of piglets per group (13, 14) is smaller than or equal to the number of teats (19) of the sow (8).

8. Method according to any one of the preceding claims, wherein the feeding area (5), the first seclusion area (6) and the second seclusion area (7) are adjacent to each other.

9. Method according to any one of the preceding claims, wherein the farrowing pen (1) is provided with a control unit, wherein the method comprises releasing the passages (16-18) by means of the control unit.

10. Method according to any one of the preceding claims, wherein the farrowing pen (1) is provided with a detection device, wherein the piglets have each been provided with a unique identification, wherein the method comprises the step of detecting the unique identifications in order to verify whether the piglets of the groups (13, 14) are all there in a certain area (5-7).

11. Farrowing pen for circulating the feeding of piglets, which pen is divided into a feeding area (5), a first seclusion area (6) and a second seclusion area (7) which are consecutive to and separated from one another, wherein the farrowing pen (1) is provided with passages (16-18) that can be closed off to piglets in order to allow movements of piglets between the feeding area (5) and the seclusion areas (6, 7), wherein the farrowing pen (1) is provided with a first group of piglets (13), a second group of piglets (14) and a sow (8) placed in the feeding area (5), wherein the first group of piglets (13) and the second group of piglets (14) are separated from each other.

12. Farrowing pen (1) according to claim 11, wherein the feeding area (5) is provided with a floor grid (9) which allows manure to pass through, wherein the first seclusion area (6) preferably is provided with a substantially level, closed floor.

13. Farrowing pen (1) according to claim 11 or 12, wherein the first seclusion area (6) is provided with a heat source, wherein the heat source preferably is a thermal lamp (11) or a floor heating.

14. Farrowing pen (1) according to claim 11-13, wherein the second seclusion area (7) is provided with enticing food, wherein the enticing food preferably is milk or colostrum (12).

15. Farrowing pen (1) according to claim 11-14, wherein the number of piglets per group (13, 14) is smaller than or equal to the number of teats (19) of the sow (8).
